# EUROPÄISCHE PATENTANMELDUNG

(11) **EP 0 714 724 A2**
(43) Veröffentlichungstag der Anmeldung: **05.06.1996**
(21) Anmeldenummer: 95118627.9
(22) Anmeldetag: 27.11.1995
(51) Int. Cl.: B23K 26/00, B60C 13/00

(54) **Verfahren und Vorrichtung zum Herstellen von Profilierungen in Gummi-Formkörpern**

(30) Priorität: 28.11.1994 DE 9419066 U
(71) Anmelder: STAHLGRUBER Otto Gruber GmbH & Co., D-81675 München (DE)
(72) Erfinder:
(74) Vertreter: Patentanwälte Beetz - Timpe - Siegfried Schmitt-Fumian - Mayr

(57) **Zusammenfassung**

Gegenstand der Erfindung ist ein Verfahren und eine Vorrichtung zum Herstellen von Profilierungen, wie Markierungen, Beschriftungen, Mustern oder dgl., in Formkörper aus Gummi oder gummiähnlichem Material, wie Luftreifen, Förderbänder, Dämm- und Verschleißschutzkörper. Die Profilierungen werden durch Einwirkung eines Laserstrahls auf die vorbestimmten Bereiche des Formkörpers eingearbeitet, wobei der Kontur der Profilierungen folgende Relativbewegungen zwischen dem Laserstrahl und dem Formkörper erzeugt werden. Die Vorrichtung enthält eine Halterung (2) für einen Formkörper (3), ein Laseraggregat mit einem verstellbaren Laserkopf (12) zum Ausrichten des Laserstrahls auf eine vorbestimmte Stelle des Formkörpers (3) und eine Steuereinheit (7) zum Erzeugen von gezielten Relativbewegungen zwischen dem Laserkopf (12) und dem Formkörper (3), die eine Eingabeeinrichtung (8) und eine Kontrolleinrichtung (9) aufweist.

## Beschreibung

Die Erfindung betrifft ein Verfahren und eine Vorrichtung zum Herstellen von Profilierungen, wie Markierungen, Beschriftungen, Mustern oder dgl., in Formkörpern aus Gummi oder gummiähnlichem Material, wie Luftreifen, Förderbänder, Dämm- und Verschleißschutzkörper usw.

Industriell hergestellte Formkörper aus Gummi oder gummiähnlichen Materialien, zu denen auch entsprechende Kunststoffe, wie PUR, gehören, werden in der Regel vom Hersteller mit dauerhaften Markierungen gekennzeichnet, die dem Benutzer Hinweise auf bestimmte Eigenschaften, Verwendungsarten oder dgl. geben. Bisher werden diese Markierungen meist in die Formwerkzeuge negativ eingraviert, so daß sie am Formkörper erhaben in Erscheinung treten. Diese Herstellung der Markierungen ist allerdings außerordentlich aufwendig, weil auch geringfügige Änderungen der Markierungen die kostspielige Herstellung von neuen Formwerkzeugen oder deren nachträgliche Bearbeitung erfordern. Entsprechendes gilt auch für die Fälle, bei denen andere reliefartige Profilierungen in eine oder meherere der Oberflächen dieser Formkörper eingearbeitet werden sollen.

Ferner können derartige Markierungen auch durch Aufdrucken hergestellt werden, was auf einfache Weise und kostengünstig erfolgen kann. Ein oder auch mehrfarbige Beschriftungen bzw. Markierungen von Gegenständen aus Gummi oder vergleichbarem Material sind jedoch hinsichtlich der Dauerhaftigkeit problematisch, wenn diese Gegenstände bzw. Formkörper in mechanisch und/oder chemisch aggressiver Umgebung eingesetzt werden. Dies gilt beispielsweise für Förderbänder und auch für Luftreifen, deren verschiedene Bereiche Umwelteinflüssen und einem abrasivem Verschleiß ausgesetzt sind.

Aufgabe der Erfindung ist es, dauerhafte Profilierungen, wie z.B. eingesenkte Muster, Beschriftungen, Marierungen etc., in Formkörper aus Gummi oder entsprechenden Materialien auf einfache und kostengünstige Weise einzuarbeiten. Diese Aufgabe wird erfindungsgemäß dadurch gelöst, daß die Profilierung durch die Einwirkung eines Laserstrahls auf die vorbestimmten Bereiche des Formkörpers eingearbeitet werden, wobei der Kontur dieser Profilierungen folgende Relativbewegungen zwischen dem Laserstrahl und dem Formkörper erzeugt werden.

Die Herstellung von Einsenkungen und Gravuren ist als Bearbeitungsverfahren von Metallen und keramischen Werkstoffen seit längerem bekannt. Bisher wurde jedoch davon ausgegangen, daß die im allgemeinen dunkelfarbigen Gummi- und entsprechende Kunststoffmaterialien für die abtragende Laserbearbeitung ungeeignet sind, weil man davon ausging, daß durch die dunklen Farben außerordentlich ungünstige Reflektionserscheinungen im Brennfleck des Lasers auftreten. Darüber hinaus wurde durch die hohen Temperaturen im Brennfleck des Lasers nachteilige Veränderungen der Materialeigenschaften in der unmittelbaren Umgebung der Bearbeitungsstelle befürchtet, beispielsweise Aushärtungen der Seitenwände oder dgl. Die Erfinder haben jedoch festgestellt, daß bei geeigneter Einstellung der jeweiligen Laserleistung und Fokussierung des Laserstrahls Einsenkungen von genau einzuhaltender Tiefe und Seitenkontur auch in dunkelfarbige Gummi- bzw. Kunststoffkörper eingearbeitet werden können, ohne daß die bisher vermuteten Probleme oder unerwünschte Verbrennungsvorgänge des Materials auftreten. Es hat sich gezeigt, daß durch geeignete Steuerung der Laserparameter, wie Laserleistung, ggf. Impulsfolge, Fokusssierung und Ausrichtung der Strahlachse in bezug auf den zu bearbeitenden Bereich des Formkörpers einerseits und der Vorschubgeschwindigkeit zwischen dem Laserstrahl und dem zu bearbeitenden Formkörper andererseits hochgenaue Einsenkungen in die dunkelfarbigen Gummimaterialien ohne Beeinflussung der Materialeigenschaften in den anstehenden Seitenwänden erzielt werden können. Dabei ist es von besonderer wirtschaftlicher Bedeutung, daß die Bearbeitungsvorgänge in normaler Luftatmosphäre durchgeführt werden können, ohne daß die befürchteten Verbrennungserscheinungen auftreten.

Das erfindungsgemäße Verfahren ist besonders zum Einarbeiten von dauerhaften Markierungen und Mustern in die Seitenwände von KFZ-Luftreifen geeignet. Dies gilt insbesondere für runderneuerte Luftreifen, die nach einem Runderneuerungsvorgang gekennzeichnet werden müssen, damit die Benutzer und auch spätere Reparaturbetriebe erkennen können, daß es sich um einen runderneuerten Luftreifen handelt und welche Runderneuerungsarbeiten ausgeführt worden sind. Zur Kennzeichnung werden Buchstaben, Symbole u. dgl. in Form von Codes verwendet, die dauerhaft an vorbestimmten Stellen der Reifenseitenwand angebracht werden, was bisher einen erheblichen Aufwand erforderte.

Das erfindungsgemäße Verfahren kann auch bei einer bestimmten Art von Luftreifen eingesetzt werden, deren Seitenwände mehrschichtig aus verschiedenfarbigen Gummimaterialien aufgebaut sind, wobei eine innere helle bzw. weiße Gummischicht von einer äußeren normal dunklen Gummischicht überdeckt wird. Zum Herstellen von Beschriftungen und insbesondere sich über den gesamten Umfang erstreckenden Mustern können nach dem erfindungsgemäßen Verfahren Einsenkungen in diese Außenschicht eingearbeitet werden, deren Tiefe so gewählt wird, daß die innere helle Gummischicht in Erscheinung tritt.

Gegenstand der Erfindung ist ferner eine Vorrichtung zum Herstellen von Profilierungen, z.B. von Markierungen, Kennzeichnungen und Beschriftungen oder dgl. in Formkörper, die teilweise oder ganz aus einem ggf. armierten Gummi oder einem vergleichbaren Material bestehen. Zu diesen Formkörpern gehören insbesondere KFZ-Luftreifen, Förderbänder, Schläuche, Verschleißkörper und ähnliche technische Artikel. Diese Vorrichtung weist erfindungsgemäß eine Halterung für zumindest einen Formkörper, ein Laseraggregat mit einem verstellbaren Laserkopf zum Ausrichten des Laserstrahls auf eine vorbestimmte Stelle des Formkörpers sowie eine Steuereinrichtung zum Erzeugen von gezielten Relativbewegungen zwischen dem Laserkopf und dem Formkörper auf, wobei die Steuereinrichtung eine Eingabeeinrichtung mit elektronischem Speicher zum Eingeben und Speichern von Marierungs- und Kennzeichnungsdaten, eine Kontrolleinrichtung zur Überwachung der Betriebsdaten, Steuerelemente für die verschiedenen Antriebsmotoren zur Erzielung der Relativbewegungen sowie Stellglieder für die Steuerung und Fokussierung des Laserstrahls enthält.

Durch die erfindungsgemäße Vorrichtung können die bisher sehr aufwendigen und ggf. auch gesundheitsschädlichen manuellen Arbeiten weitestgehend automatisiert werden. Es ist lediglich noch erforderlich, den zu markierenden Luftreifen manuell in der Halterung zu positionieren und festzulegen. Alle weiteren Vorgänge, insbesondere die genaue Lagefixierung des Luftreifens in bezug auf den Laserkopf sowie auch die für die Kennzeichnung erforderlichen Relativbewegungen zwischen dem Laserkopf und dem Luftreifen, können mit der erfindungsgemäßen Vorrichtung automatisch ausgeführt werden. Durch den in der elektronischen Programmsteuerung vorgesehenen Speicher können eine Vielzahl von Luftreifen eines Typs mit jeweils gleichen Symbolen gekennzeichnet werden, ohne daß der Bediener für jeden Reifen eine gesonderte Eingabe vornehmen müßte. Bei Reifen unterschiedlichen Typs und/oder anderer durchgeführter Runderneuerungen kann mit Hilfe der vorzugsweise als Pult ausgeführten Eingabeeinrichtung durch Betätigen der Tastatur die jeweils gewünschte Beschriftung gewählt werden.

Zweckmäßig ist die Halterung zum aufrechten Positionieren eines Luftreifens ausgebildet und aus einer Beladestation in eine Beschriftungsstation selbsttätig verfahrbar. Die Halterung kann Mittel zum motorischen Verdrehen eines aufstehenden Luftreifens enthalten, z.B. in Form einer drehangetriebenen Aufstandsrolle.

Um Schäden durch einen willkürlich austretenden Laserstrahl sicher zu verhindern, ist eine Abdeckhaube in zumindest in der Beschriftungsstation vorgesehen, die den Laserkopf und den Luftreifen zumindest während eines Kennzeichnungsvorganges umgibt. Diese Abdeckhaube kann entweder fest montiert oder aber auch zur besseren visuellen Kontrolle des in die Beschriftungsstation transportierten Luftreifens bewegbar, z.B. nach oben verschwenkbar, ausgebildet sein, wobei in diesem Fall durch elektrische Schaltungen sichergestellt sein muß, daß das Laseraggregat nur dann in Betrieb genommen werden kann, wenn sich die Schutzhaube in ihrer Schließstellung befindet.

Um die bei dem Einbrenn-Vorgang entstehenden Gase und staubförmigen Partikel nicht in die Umgebung gelangen zu lassen, ist unmittelbar neben dem Laserkopf innerhalb der Schutzhaube eine Absaugeinrichtung angeordnet.

Weitere Besonderheiten und Vorzüge der Erfindung ergeben sich aus der folgenden Beschreibung von Ausführungsbeispielen anhand der Zeichnung.

Es zeigen:
1. Schematisch eine Kennzeichnungs- und Beschriftungsvorrichtung mit einer Eingabestation und einer Beschriftungsstation in schematischer Darstellung;
2. die wesentlichen Teile in der Beschriftungsstation in schematischer perspektivischer Ansicht.

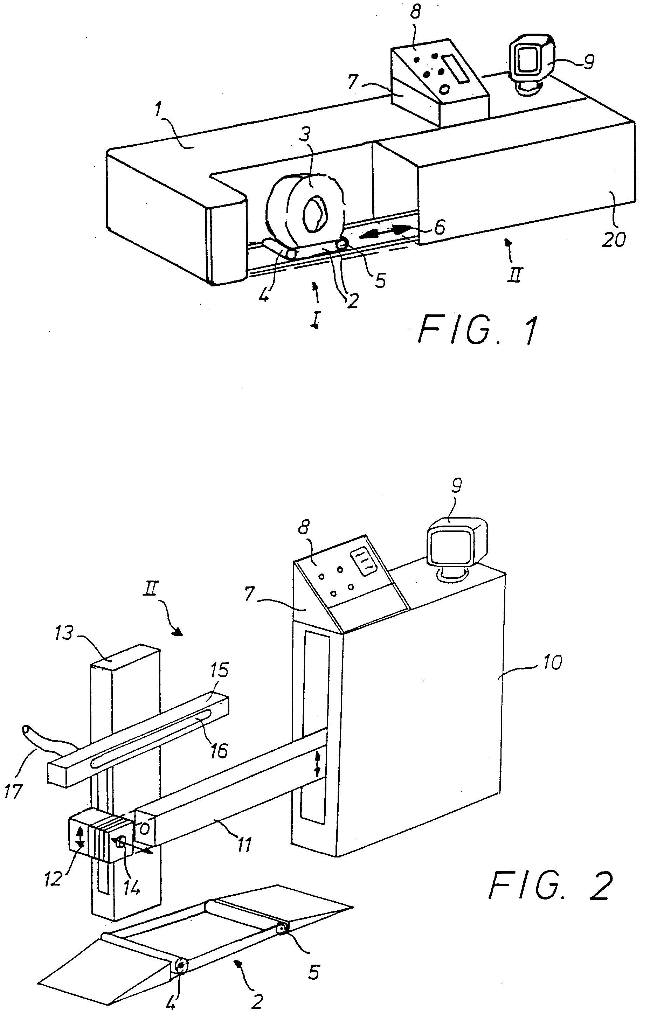

Die in Fig. 1 dargestellte Vorrichtung enthält eine von außen bequem zugängliche Beladestation I sowie eine Bearbeitungsstation II, in welcher sich ein Laserkopf befindet und die von einer Schutzhaube umgeben ist.

Wie aus Fig. 1 ersichtlich ist in einem weitgehend geschlossenen Gehäuse 1 in einer von der Stirnseite her zugänglichen Ausnehmung eine Halterung 2 in Bodennähe vorgesehen, in die ein Luftreifen 3 eingesetzt wird. Diese Halterung 2 ist so ausgebildet, daß der eingesetzte Luftreifen in einer genau vorgegebenen Lage fixiert werden kann. Bei der in Fig. 1 dargestellten Halterung sind beispielsweise zwei Rollen 4, 5 quer zur Transportrichtung vorgesehen, die seitlich durch zwei Längsstreben 6 miteinander verbunden sind. Diese Rollen 4, 5 können drehbar gelagert sein, so daß der darauf abgestützte Luftreifen 3 manuell verdreht werden kann. Es ist jedoch auch möglich, eine dieser Rollen oder auch eine in der Beschriftungsstation II vorgesehene weitere Kontaktrolle motorisch anzutreiben, um den Luftreifen in eine vorgegebene Drehstellung zu bringen und in dieser zu sichern, bzw. den Luftreifen während des Bearbeitungsvorgangs zu verdrehen. Nach der genauen Positionierung des Luftreifens 3 auf der Halterung 2 wird diese in Richtung des Pfeiles 6 in die Beschriftungsstation II eingefahren. Durch einen elektrischen Sicherungskreis kann festgelegt werden, daß ein Kennzeichnungs- bzw. Beschriftungsvorgang erst dann beginnt, wenn ein geeigneter Sensor, z.B. eine Lichtschranke, festgestellt hat, daß sich der Luftreifen 3 in seiner Beschriftungsstellung befindet.

Der automatische Ablauf der Transport- und Graviervorgänge wird durch eine programmierbare elektronische Steuereinheit 7 initiiert und überwacht, die mit einer Eingabevorrichtung 8 in Form eines Schreib- und Tastenpultes sowie mit einer als Bildschirm ausgeführten Anzeigevorrichtung 9 verknüpft ist.

Die in Fig. 2 schematisch ohne Schutzhaube dargestellte Gravierstation enthält einen kastenförmigen Ständer 10, in dem das - nicht dargestellte - Laseraggregat angeordnet ist. Der Laserstrahl verläuft in einem horizontalen Leitrohr 11, das in an sich bekannter Weise ausgebildet sein kann und ggf. von einem Kühlmedium durchströmt wird. Dieses Leitrohr 11 durchragt einen Führungsausschnitt 12 in der Stirnseite des kastenförmigen Ständers 10 und ist mittels im Ständerinneren angeordneten Führungen und Stellmotoren vertikal in Pfeilrichtung verstellbar. Der in diesem Leitrohr 11 geführte Laserstrahl tritt in einen Laserkopf 13 ein, der ebenfalls vertikal verstellbar an einer Säule 18 montiert ist und ein - nicht dargestelltes - Reflektionselement enthält, an dem der Laserstrahl umgelenkt wird und durch eine Fokussier-Optik 14 etwa parallel zur Achse des - in Fig. 2 nicht dargestellten - Luftreifens austritt. Der Laserkopf 12 mit der integrierten Optik 14 führt die gleichen Vertikalbewegungen wie das Leitrohr 11 unter Führung an der Säule 13 aus und ist in sich horizontal verstellbar ausgebildet, um den optimalen Abstand der Optik 14 zur Seitenwand des - in Fig. 2 nicht dargestellten - Luftreifens einstellen zu können. Um ein stets senkrechtes Auftreffen des Laserstrahls auf die gewölbten Außenflächen der Reifenseitenwände zu erzielen, kann der Laserkopf 13 um die Mittelachse des Leitrohrs 11 verdrehbar ausgebildet und über ein Drehgelenk bzw. eine Drehführung an der Säule 18 oder am freien Ende des ggf. in seiner Länge verstellbaren - teleskopartig - auch hohlzylindrischen Leitrohrs montiert sein.

An der Säule 13 ist ferner ein Saugrohr 15 montiert, das an der dem Arbeitsbereich zugewandten Seite eine oder auch mehrere Saugöffnungen 16 aufweist. Dieses Saugrohr 15 ist über einen Schlauch 17 an ein Sauggebläse mit Reinigungsfiltern angeschlossen. Aus Sicherheitsgründen ist auch bei dieser Ausführung eine - nicht dargestellte - Schutzkabine vorgesehen, die den auf der Halterung positionierten Luftreifen und zumindest den Laserkopf umgibt und die eine Sicherheitsschaltung aufweist, welche bei einer Fehlausrichtung des Laserkopfes die gesamte Vorrichtung abschaltet, um Verletzungen, insbesondere Aufgenverletzungen, durch einen "vagabundierenden" Laserstrahlt auszuschließen.

Die Erfindung ist nicht auf das dargestellte Ausführungsbeispiel beschränkt. So können beispielsweise auch andere Laserköpfe 14 verwendet werden, die über entsprechende Gelenke verschwenkbar sind, um ein genau senkrechtes Auftreffen des Laserstrahls auf die Reifenwandung sicherzustellen. Darüber hinaus kann der Laserkopf auch mit einem Tiefenmesser versehen sein, der z.B. opto-elektrisch die Eindringtiefe des Laserstrahls in das Reifenmaterial erfaßt und dementsprechend die Leistung des Laseraggregates steuert, um die jeweils gewünschte optimale Eindringtiefe einzuhalten. Ferner kann die Vorrichtung durch eine entsprechende Änderung insbesondere der Reifenhalterung auch so abgewandelt werden, daß Reifen in liegender Position beschriftet werden können. Schließlich ist es auch möglich, die Relativbewegungen zwischen dem Luftreifen und der Optik des Laserkopfes durch eine z.B. mittels Schrittmotoren in drei Achsen bewegbare Halterung zu erzielen.

## Patentansprüche

1. Verfahren zum Herstellen von Profilierungen, wie Markierungen, Beschriftungen, Mustern oder dgl., in Formkörper aus Gummi oder gummiähnlichem Material, wie Luftreifen, Förderbänder, Dämm- und Verschleißschutzkörper,
dadurch gekennzeichnet, daß
die Profilierungen durch Einwirkung eines Laserstrahls auf die vorbestimmten Bereiche des Formkörpers eingearbeitet werden, wobei der Kontur der Profilierungen folgende Relativbewegungen zwischen dem Laserstrahl und dem Formkörper erzeugt werden.

2. Verfahren nach Anspruch 1 zum Herstellen von Markierungen, Mustern und/oder Beschriftungen in den Seitenwänden von KFZ-Luftreifen, dadurch gekennzeichnet,
daß der Luftreifen mit einer vorgegebenen Drehgeschwindigkeit um seine Mittelachse gedreht wird und
daß dem auf die Reifenseitenwand gerichteten Laserstrahl programmierte mehrachsige der Kontur der einzuarbeitenden Vertiefungen folgende Bewegungen erteilt werden.

3. Verfahren nach Anspruch 1 oder 2, dadurch gekennzeichnet, daß die Abtragstiefe des Laserstrahls durch die Laserleistung und/oder die Relativbewegung zwischen dem Formkörper und dem Laserstrahl auf vorgegebene Werte gesteuert werden.

4. Vorrichtung zum Herstellen von Profilierungen, z.B. von Markierungen, Kennzeichnungenen, Beschriftungen oder dgl. in Formkörpern aus Gummi oder dgl., wie Kfz-Luftreifen,
gekennzeichnet durch
- eine Halterung (2) für einen Formkörper (3),
- ein Laseraggregat mit einem verstellbaren Laserkopf (12) zum Ausrichten des Laserstrahls auf eine vorbestimmte Stelle des Formkörpers (3) und
- eine Steuereinheit (7) zum Erzeugen von gezielten Relativbewegungen zwischen dem Laserkopf (12) und dem Formkörper (3), die eine Eingabeeinrichtung (8) und eine Kontrolleinrichtung (9) enthält.

5. Vorrichtung nach Anspruch 4 zum Herstellen der Profilierungen in Luftreifen, dadurch gekennzeichnet, daß die Halterung (2) zum aufrechten Positionieren und zum Verdrehen eines Luftreifens (3) um seine Längsachse ausgebildet ist.

6. Vorrichtung nach Anspruch 4 oder 5, dadurch gekennzeichnet, daß die Halterung (2) zwischen einer Beladestation I in eine Gravierstation II verfahrbar ist.

7. Vorrichtung nach einem der Ansprüche 4 bis 6, gekennzeichnet durch eine ggf. bewegbare Abdeckhaube (20), die den Laserkopf (12) und den Luftreifen (3) zumindest in der Beschriftungsstation I während des Kennzeichnungsvorganges umgibt und Not-Abschaltmittel für das Laseraggregat enthält.

8. Vorrichtung nach einem der Ansprüche 4 bis 7, dadurch gekennzeichnet, daß in der Beschriftungsstation II eine Absaugeinrichtung (15 - 17) vorgesehen ist.

9. Vorrichtung nach einem der Ansprüche 4 bis 8, dadurch gekennzeichnet, daß das Laseraggregat in einem kastenförmigen Ständer (10) angeordnet und mit einem Leitrohr (11) vertikal verfahrbar ist, wobei am Ständer (10) die Steuereinheit (7) mit der ein Tastenpult enthaltenden Eingabeeinheit und die in Form eines Bildschirms ausgebildete Kontrolleinrichtung montiert sind.

10. Vorrichtung nach einem der vorhergehenden Ansprüche, dadurch gekennzeichnet, daß der Laserkopf (12) ein Reflektionselement zum Umlenken des Laserstrahls sowie eine Fokussieroptik (14) enthält.
